# EUROPÄISCHE PATENTSCHRIFT

(11) **EP 0 660 941 B1**
(45) Veröffentlichungstag und Bekanntmachung des Hinweises auf die Patenterteilung: **02.12.1998**
(21) Anmeldenummer: 93918996.5
(22) Anmeldetag: 15.09.1993
(51) Int. Cl.: G02B 21/00, G02B 21/24

(54) **MODULARES MIKROSKOPSYSTEM**
MODULAR MICROSCOPE SYSTEM
SYSTEME DE MICROSCOPE MODULAIRE

(30) Priorität: 19.09.1992 DE 4231470
(43) Veröffentlichungstag der Anmeldung: 05.07.1995
(73) Patentinhaber: Leica Microsystems Wetzlar GmbH, 35578 Wetzlar (DE)
(72) Erfinder: SCHALZ, Karl-Josef, Dr.,, D-35781 Weilburg (DE)
(74) Vertreter: Stamer, Harald
(86) Internationale Anmeldenummer: DE9300860
(87) Internationale Veröffentlichungsnummer: WO9407163

(56) Entgegenhaltungen:
- DE-A- 3 037 648
- DE-A- 3 230 504
- DE-A- 3 523 902
- GB-A- 1 164 241
- ZEISS INFORMATION Bd. 29, Nr. 98 , Juli 1987 , AMSTERDAM NL Seiten 4 - 8 G. HÖCHERL 'The new generation of microscopes from Carl Zeiss: research microscopes Axioplan and Axiophot and inspection microscope Axiotron'

## Beschreibung

Die Erfindung betrifft ein modulares Mikroskopsystem mit einem zusammengesetzten Mikroskop-Grundkörper, der einen Stativfuß, ein Stativoberteil und einen Zwischen-Modul mit ansetzbarem Binokular-Gehäuse aufweist, wobei der Grundkörper in mehrteiliger Rahmenkonstruktion ausgebildet ist.

Aus der DE 30 37 556 A1 ist bereits ein Mikroskop bekannt, das einen Grundrahmen aufweist, in dessen vertikalem Teil Schwalbenschwanz-Führungen übereinander angeordnet sind, die das Einsetzen von schubkastenartig ausgebildeten Modulen ermöglichen. Die als Gleitführungen bezeichneten Schwalbenschwanz-Führungen sind in der inneren Gehäusewandung kontinuierlich ausgebildet. Sie erfordern ein hohes Maß an fertigungstechnischer Präzision über die gesamte Verschiebelänge jedes einzelnen Moduls. Da diese Gleitführungen Ausnehmungen im inneren Wandbereich des vertikalen Stativträgerteils, das in Kompaktbauweise ausgeführt ist, darstellen, fallen neben den fertigungstechnischen Problemen beim präzisen Herstellen vieler übereinander angeordneter paralleler Schwalbenschwänze auch noch Temperatureinflüsse in der Weise negativ ins Gewicht, daß es bei größeren Temperaturintervallen zu Druck- bzw. Zugbeanspruchungen zwischen der Gehäuse-Innenwandung einerseits und dem Einschub-Modul andererseits kommt, woraus schließlich eine mehr oder weniger schwergängige Schubladen-Führung resultiert.

Aus der EP 90 967 B1 ist darüber hinaus bereits ein Chassis für optische Geräte bekannt, welches als 3-dimensionales verwindungssteifes Hohlgerüst, welches aus mehreren Teilen zusammengesetzt sein kann, erstellt ist, wobei als Material stranggepreßtes Aluminiumoxid angegeben wird. Dabei können die einzelnen Gehäuseteile "angarniert", also zusammengesintert werden oder aber auch lösbar miteinander verbunden sein, z. B. durch Schraubenverbindungen mit Zuganker. Für den Fall, daß es sich um zusammengesinterte Bauteil-Gruppen handelt, ergibt sich keine Möglichkeit des schnellen Austausches einzelner Grundkörper-Teile; für den Fall, daß die Keramik-Chassis-Teile durch Schrauben bzw. andere Verankerungsmittel zusammengehalten werden, ergeben sich Probleme durch die unterschiedliche Materialwahl (einerseits Keramik, andererseits Metallschrauben bzw. Metallanker.) Auch ist es technisch nicht vollkommen realisierbar, für Präzisions-Mikroskope entsprechende Gehäuse-Grundkörper mit den geforderten engen Toleranzen aus Keramikmaterial herzustellen. Hinzu kommt als weiterer Nachteil die Beschädigungs- bzw. Verschleißanfälligkeit von aus Keramiken hergestellten, modular konzipierten - also insbesondere auch zum Austausch vorgesehenen - Bauteile.

Schließlich ist aus der GB 1 164 241 A ein Mikroskop mit auswechselbaren Ergänzungseinrichtungen bekannt, wobei ein Bauteil auf der ebenen Oberfläche eines Mikroskopstativs aufsetzbar ist. Dazu wird dieses Bauteil mittels einer Bajonettverriegelung, die sich an dem einen Ende des sich längserstreckenden Bauteils befindet, auf dem Stativoberteil angeflanscht. An dem anderen Ende des Bauteils befinden sich an dessen Unterseite zwei Noppen, die der einfachen Abstützung dieses Modul-Teils dienen. Mit derartigen Punkt-Auflagen ist lediglich eine Distanz -Einstellung zwischen dem Modul und dem Stativrücken gegeben. Eine räumlich-exakte Justier-Positionierung ist mit dieser vorgeschlagenen konstruktiven Ausbildung indes nicht möglich

Es ist daher die Aufgabe der vorliegenden Erfindung, ein Mikroskopsystem der eingangs genannten Art bereitzustellen, bei dem unter Beachtung ergonomischer Aspekte und unter Einsatz moderner fertigungstechnischer Herstellungsverfahren ein modulares Mikroskopsystem angegeben wird, bei dem ein systemintegriertes Auf- und Abrüsten der einzelnen System-Bauteile möglich ist, wobei die Einblickhöhe für die Beobachter jeweils konstant bleibt.

Die Aufgabe wird erfindungsgemäß durch die im kennzeichnenden Teil des Anspruchs 1 angegebenen Merkmale gelöst. Die Präzi-sions-Anschlagflächen können insbesondere als kleindimensionierte plane Anlagebzw. Auflageflächen ausgebildet sein, welche hinsichtlich ihrer Anordnung in der Ebene bzw. im Raum des Gehäuses mit der flächigen bzw. räumlichen Dimensionierung des positionsgerecht zu fixierenden Trägers korrespondieren. Es ist darüber hinaus auch möglich, daß die Präzisions- Anschlagflächen als nicht plane Anlage- bzw. Auflageflächen bzw. als Punkt-Anlage- bzw. Punkt-Auflageflächen ausgebildet sind. Nach einer besonders vorteilhaften Ausführungsform ist für die exakte Positionierung eines Trägers mindestens ein einstückiges Kombinations-Anschlagflächensystem vorgesehen, welches mindestens zwei Präzisions-Anschlagflächen aufweist, die sich in definierter räumlicher Zuordnung - vorzugsweise in senkrecht zueinander ausgerichteten Ebenen - befinden. Die genannten Präzisions-Anschlagflächen können beispielsweise auf zylindrischen oder kegelstumpfförmigen Gehäuse-Ausstülpungen, die von der inneren Deckenwandung eines Grundkörper-Teils stalaktitenartig herabhängen, angeordnet sein. Ebenso ist es möglich, daß die Präzisions- Anschlagflächen auf zylindrischen oder kegelstumpfförmigen Gehäuse-Ausstülpungen angeordnet sind, die von der inneren Bodenwandung des Grundkörper-Teils stalagmitenartig emporragen.

Nach einer weiteren Ausführungsform der vorliegenden Erfindung können die die Anschlagflächen tragenden Gehäuse-Ausstülpungen entlang ihren Längsausdehnungen teilweise von den Seitenwandungen der Grundkörper-Teile aufgenommen werden bzw. mit ihnen räumlich verschmelzen. Es ist zusätzlich möglich, daß in den Innenräumen der Grundkörper-Teile plane und/oder gewinkelte wandförmige Gehäuse-Innenraum-Aufteiler vorgesehen sind, die - gegebenenfalls - mit Präzisions-Auflageflächen versehen sind. Dabei können die Auflageflächen derart gestaltet sein, daß sie sich nur auf einem erhaben ausgebildeten Teilbereich der Gehäuse-Innenraum-Aufteiler befinden. Die erfindungsgemäße Einrichtung kann so getroffen sein, daß einige der die Auflageflächen aufweisenden Ausstülpungen bzw. Gehäuse-Innenraum-Aufteiler entlang ihren Längserstreckungen Bohrungen aufweisen, die mit entsprechenden Ausnehmungen, beispielsweise mit Löchern, Halblöchern, Langlöchern, Spalten und Einkerbungen, in bzw. an den Trägern korrespondieren.

Die Träger können im wesentlichen 2-dimensional, beispielsweise als Bühne, Boden oder Schieber, zum An- oder Einsetzen an bzw. in eines der Teilsysteme des Mikroskop-Grundkörpers ausgebildet sein. Es ist indes auch möglich, daß die Träger als 3-dimensionale Gehäuse-Teile, beispielsweise als Rohr, Quader, Kubus, Prisma, Parallelepiped oder als gewinkeltes Chassis-Teil, zum An- oder Einsetzen oder Einschieben an bzw. in mindestens eines der Teilsysteme des Mikroskop-Grundkörpers ausgebildet sind.

Nach einer weiteren Ausführungsform der vorliegenden Erfindung ist zusätzlich mindestens ein Halteorgan vorgesehen, das den Träger zumindest teilweise formschlüssig umgreift, wobei für die exakte Positionierung dieses Halteorgans ebenfalls entsprechende Präzisions-Anschlagflächen in bzw. an den Grundkörper-Teilen vorgesehen sind. Der Träger kann auch als Einschub-Modul ausgebildet sein, in dem entlang dessen optischer Achse mehrere Filter hintereinander angeordnet sind, die mit zugeordneten Filterschiebern wahlweise einzeln in Wirkstellung bringbar sind. Der Träger kann auch als abgewinkelter Halterungsteil für den Mikroskoptisch ausgebildet sein, wobei die Halterung bzw. Führung im Vertikalbereich des Stativoberteils Präzisions-Anschlag- und Führungsflächen für eine spielfreie Vertikalverstellung (z-Richtung) aufweist.

Es ist möglich, daß der Träger neben optischen Bauelementen, wie Spiegeln, Linsen und Blenden, zusätzlich eine endmontierte Revolver-Einrichtung aufweist, die ihrerseits vorjustierte und endmontierte Bauteile gleicher Art, aber unterschiedlicher physikalisch-optischer Funktion, beispielsweise Fluoreszenzteiler-Würfel, enthält. Auch kann der Träger als Einschub-Modul ausgebildet sein, indem entlang dessen optischer Achse mehrere Blenden, beispielsweise ortsfeste oder ortsvariable Festblenden oder formvariable Blenden, angeordnet sind, die mittels zugeordneter Steuerungsmittel in Wirkstellung bringbar und - gegebenenfalls - größenvariabel eingestellt werden können. Auch ist es möglich, daß ein eine Tubuslinse aufweisender Zwischen-Modul, der auf den kragenden Horizontalteil des Stativoberteils mittels entsprechender Präzisions-Anschlagflächen aufsetzbar ist, vorgesehen ist und daß dieser gegen einen anderen Zwischen-Modul, der neben einer Tubuslinse auch eine schaltbare und vorjustierte Bertrand-Linse aufweist, austauschbar ist derart, daß die Einblickhöhe des gesamten Mikroskopsystems dabei unverändert bleibt. Ein weiterer Zwischen-Modul ist dadurch gekennzeichnet, daß er zusätzlich einen diskontinuierlichen Vergrößerungswechsler bzw. ein Zoom-System bzw. eine Polarisations-Anordnung aufweist.

Die Erfindung ist nachstehend anhand der Figuren näher erläutert. Es zeigen:
- Figur 1a:: eine perspektivische Ansicht eines erfindungsgemäßen modularen Mikroskopsystems;
- Figur 1b:: eine perspektivische Darstellung des in Figur la dargestellten Systems aus einer anderen Sicht mit zusätzlichem Gehäuse-Modul;
- Figur 2a:: einen Stativfuß in perspektivischer, teilweise aufgeschnittener Darstellung;
- Figur 2b:: einen einschiebbaren Filter-Modul in perspektivischer Darstellung;
- Figuren 3a - 3c:: konische Gehäuse-Ausstülpungen mit Präzisions-Anschlagflächen;
- Figur 3d:: einen wandförmigen Gehäuse-Innenraum-Aufteiler mit Präzisions-Anschlagfläche;
- Figur 4a:: ein Stativoberteil in perspektivischer Darstellung;
- Figur 4b:: einen erfindungsgemäßen 2-dimensionalen Träger mit vorjustierten Bauteilen;
- Figur 4c:: den in Figur 4b dargestellten Träger mit zusätzlicher Schwalbenschwanz-Führung;
- Figur 5:: einen Zwischen-Modul.

In den Figuren la bzw. 1b ist ein modulares Mikroskopsystem dargestellt, das einen Mikroskop-Grundkörper enthält, der aus einem Stativfuß (1), einem Stativoberteil (2) und einem Zwischen-Modul (3) mit an- bzw. aufsetzbarem Binokular-Gehäuse (4) besteht. Der Stativfuß (1) geht in seinem zum Beobachter gewandten Teil in eine beidseitig angebrachte, ergonomisch flache Handauflage (5) über. Das Stativoberteil (2) weist einen Vertikalteil auf, an bzw. in dessen Seitenbereichen manuelle Bedienmittel (6) für die Steuerung von Bewegungs- bzw. Regelungsabläufen vorgesehen sind. Im zum Betrachter gerichteten Vertikal-Teil des Stativoberteiles (2) ist eine Präzisions-Führung für einen Tischwinkel (8) vorgesehen, der mit dem Mikroskoptisch (9) lösbar verbunden ist.

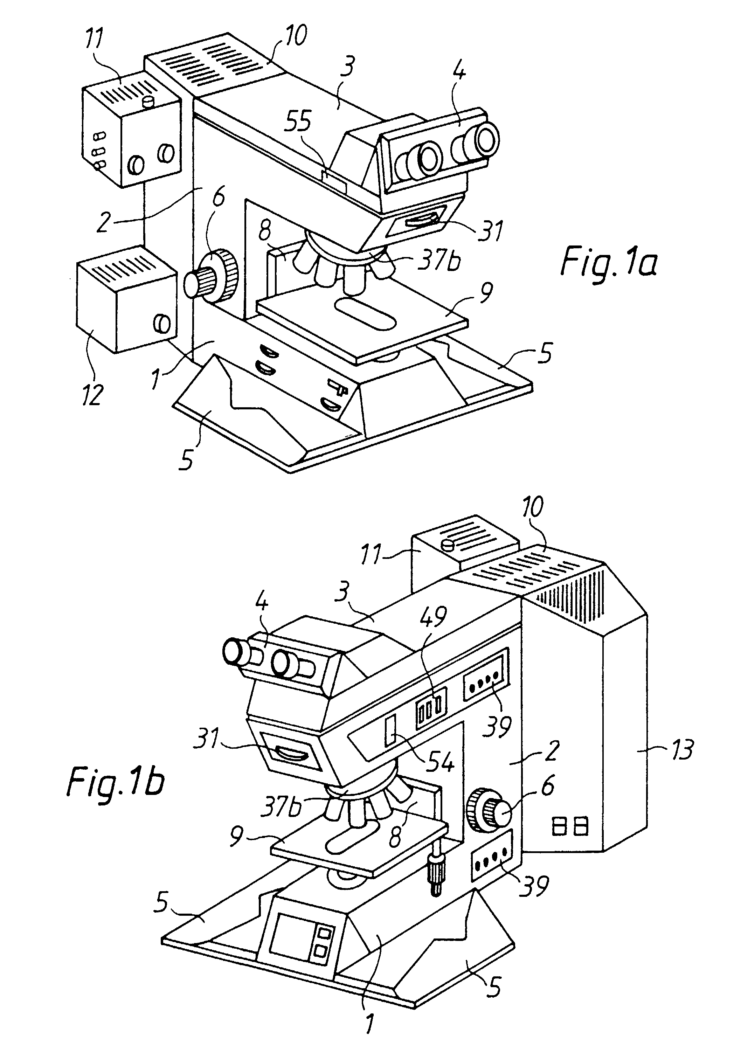

Im Bereich des vom Betrachter wegweisenden Vertikal-Teils des Zwischen-Moduls (3) sowie des Stativoberteils (2) ist ein Spiegelgehäuse (10) adaptiert, dem einerseits Lampengehäuse (11, 12) und andererseits ein weiterer Gehäuse-Modul zugeordnet ist, welcher u. a. die elektrischen bzw. die elektronischen Versorgungs- und Regelungseinrichtungen für das Gesamtsystem enthält, vgl. Figur 1b.

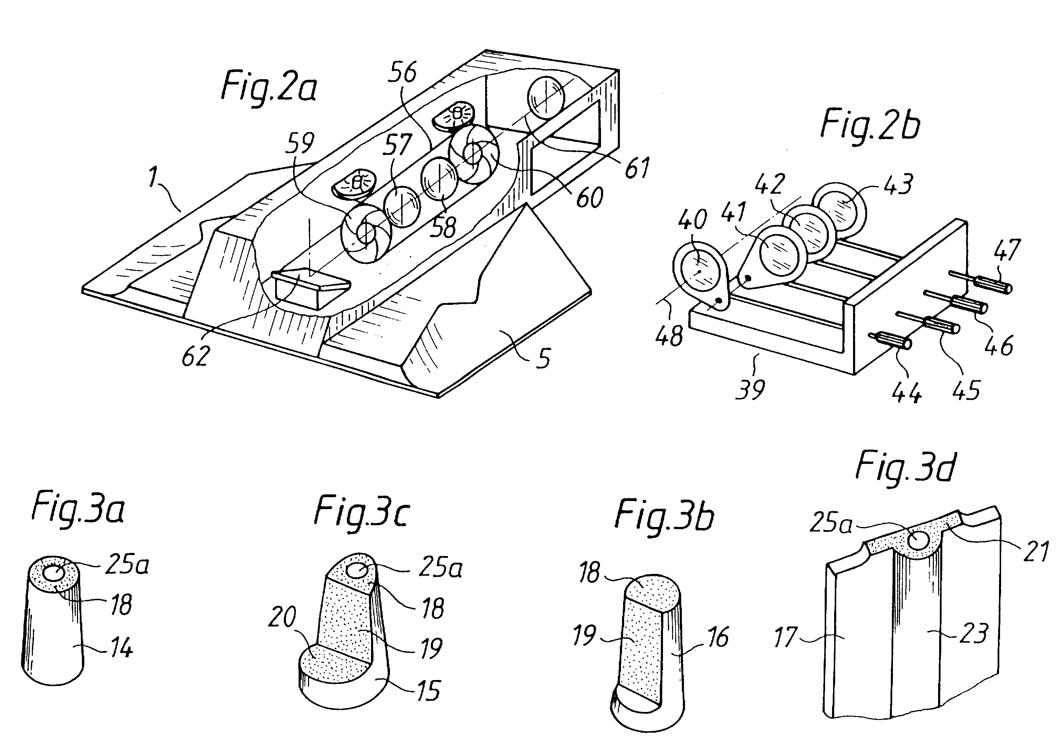

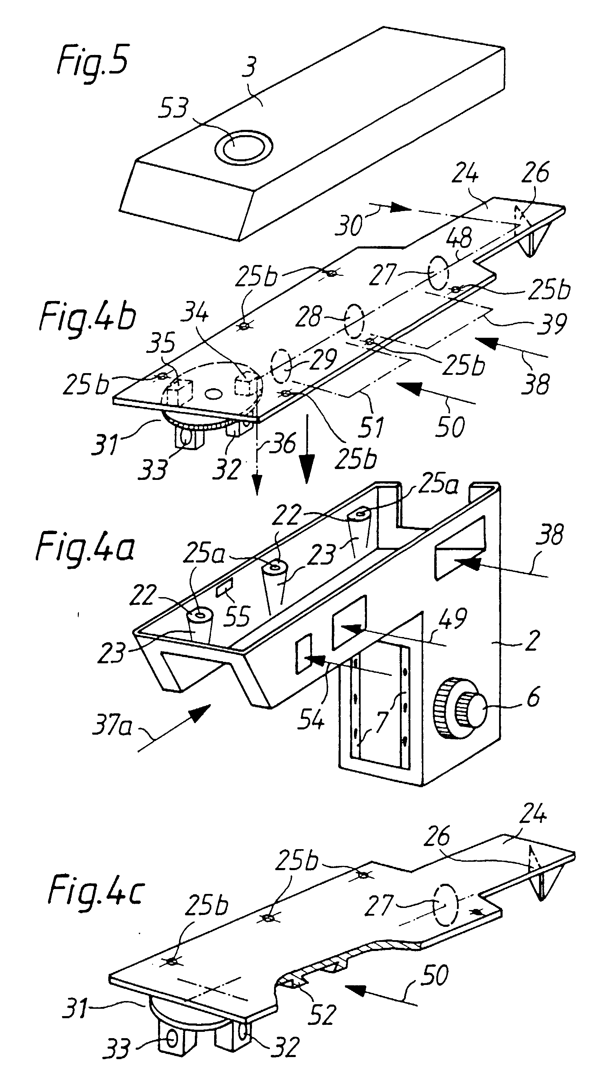

Das erfindungsgemäße modulare Konstruktions-, Justage- und Montage-Prinzip wird nachstehend insbesondere unter Bezugnahme auf die Figuren 3a bis 3d in Verbindung mit den Figuren 2a und 4a bis 4c näher erläutert:

Um die Steifigkeit von Rahmenkonstruktionen für komplex zusammengesetzte, modular konzipierte optische Präzisions-Geräte, insbesondere Mikroskope, zu erhöhen und dabei gleichzeitig unter dem Gesichtspunkt einer Materialeinsparung, einer flexiblen Fertigung und einer service- und montagefreundlichen Bauweise-Konzeption vorzugehen, werden die einzelnen Mikroskop-Grundkörper-Module, wie Stativfuß (1), Stativoberteil (2) und Zwischen-Modul (3), in einstückiger Bauweise, beispielsweise aus Aluminium oder Messing, in einem Herstellungsvorgang erstellt, wobei in ihren jeweiligen Innenbereichen bereits Querwände bzw. Querrippen bzw. Pfosten bzw. Winkel bzw. Pflöcke zusammen mit dem eigentlichen Gehäuse-Modul hergestellt werden. Sie werden in den vorliegenden Anmeldung allgemein als nach innen gerichtete "Gehäuse-Ausstülpungen" bezeichnet. Dabei ist von Bedeutung, daß die Positionierung und die Endmaße dieser Ausstülpungen noch nicht mit letzter zu fordernder Präzision vorliegen müssen. In einem weiteren Bearbeitungsgang werden die in den Figuren 3a bis 3c dargestellten kegelstumpfförmigen Ausstülpungen (14-16) bzw. der in Figur 3d dargestellte wandförmige Gehäuse-Innenraum-Aufteiler (17) einer mechanischen Präzisions-Endbehandlung unterzogen derart, daß sie mit - vorzugsweise planen - Präzisions-Anschlagflächen (18-20) versehen werden, die mit entsprechend präzise erstellten Gegenflächen der Träger korrespondieren. Dabei können die Ausstülpungen auch mehrere Präzisions-Anschlagflächen aufweisen, wie es beispielsweise in den Figuren 3b bzw. 3c dargestellt ist.

Aus statischen Konstruktionsgründen wird man die Längserstreckung der kegelstumpfförmigen Ausstülpungen vorzugsweise in Schwerkraft-Richtung ausrichten, wobei es unerheblich ist, ob sie an der inneren oberen Deckenwandung eines horizontalen Gehäuse-Teils stalaktitenartig angeformt sind oder ob sie auf der inneren Basisfläche eines horizontalen Grundkörper-Teils nach Art von stalagmitenartigen Säulen bzw. Pfosten bzw. Pflöcken positioniert sind. Es ist aber auch möglich, vgl. Figur 4a, an den inneren Vertikal-Wänden von horizontalen Grundkörper-Teilen Anformungen (23) vorzusehen, die als zylindrische oder kegelstumpfförmige Körper entlang ihrer Längsseite partiell mit der vertikalen Innenwandung verschmelzen und die sich nach unten hin - also in Richtung zum Stativfuß (1) - verjüngen. Wie unmittelbar aus den Figuren 4b bzw. 4c zu erkennen, ist der dort dargestellte Träger (24) mit entsprechenden Durchbohrungen (25b), und darüber hinaus in bzw. an seiner zum Stativoberteil (2) weisenden Seite mit entsprechenden Anflansch-Flächen versehen, die mit den Anschlagflächen (22) korrespondieren.

Obwohl aus konstruktiven Gründen ein 3-Punkt-Kontakt für die justiergenaue Positionierung von im wesentlichen 2-dimensionalen Trägern (24) ausreichend ist, kann es bei großflächigen Dimensionierungen zweckmäßig sein, einen 4-Punkt-Kontakt bzw. einen höherzähligen Multipunkt-Kontakt zu realisieren. In jedem Fall handelt es sich aber um eine diskontinuierliche Kontaktierung von Modulen, Modul-Teilen bzw. Trägern (24). Hierin besteht ein wesentlicher Unterschied im Vergleich zu herkömmlichen Schwalbenschwanz-Führungen, die in Verschieberichtung kontinuierliche Längsführungen aufweisen müssen, die zu den weiter oben bereits geschilderten Nachteilen führen.

Der Träger (24) in Figur 4b weist einzelne Bauelemente auf, beispielsweise einen Umlenkspiegel (26), Linsen (27-29) sowie - gegebenenfalls - weitere strahlenumlenkende, strahlenbeeinflußende bzw. strahlquerschnittsverändernde Bauelemente. Dabei ist es für die vorliegende Erfindung von besonderer Bedeutung, daß sämtliche auf dem Träger (24) vorgesehene Bauelemente bereits vorjustiert und endmontiert sind, so daß der Träger (24) gewissermaßen als "Fassungsteil" für jedes einzeln positionierte optische Bauelement angesehen werden kann. Es ist daher lediglich noch erforderlich, einen so bestückten Träger (24) - im vorliegenden Fall - in das frei zugängliche Stativoberteil (2) einzulegen, wobei durch die präzisen Anschlagflächen auf dem Träger (24) sowie im Innenbereich des Horizontalteils des Stativoberteils (2) eine Exakt-Positionierung und - Halterung jedes der Bauteile (26-29) in Bezug auf das Gesamtsystem realisiert werden kann. Die Fixierung des Trägers (24) erfolgt mittels Schrauben. Es sind allerdings auch äquivalente Befestigungsmittel möglich, wobei die Schraubenverbindung den Vorteil einer wieder lösbaren Verbindung - beispielsweise für Umrüstungszwecke beim Wechsel von einer mikroskopischen Beobachtungsart in eine andere - aufweist.

In Figur 4b ist mit dem Pfeil (30) die Einfallsrichtung eines Beleuchtungsstrahls angegeben; die Bestückung des Trägers (24) selbst stellt einen Auflichtbeleuchtungs-Modul dar. Der steht in optischer Verbindung mit einem Fluoreszenz-Teilerrevolver (31), der mit vier Fluoreszenz- Teilerwürfeln (32-35) bestückt ist, wobei sich der Fluoreszenz-Teilerwürfel (34) in der dargestellten Version gerade in Wirkstellung befindet und den bei (30) einfallenden Lichtpfad in Richtung des Pfeils (36) vertikal nach unten in Richtung auf den nicht mit dargestellten Objektivrevolver umlenkt, der, wie aus Figur 4a ersichtlich, in den zum Beobachter weisenden Teil des Horizontal-Bereiches des Stativoberteils (2) als Einschub-Modul eingeführt werden kann, was durch den dargestellten Pfeil (37a) rein schematisch verdeutlicht werden soll.

In die mit (38) bezeichnete Einschub-Öffnung kann in an sich bekannter Weise ein Filter-Modul (39), wie es in Figur 2b dargestellt ist, eingeführt werden. Dieses Modul (39) besteht beispielsweise aus 4 einklappbaren Filtern (40-43), die mittels von außen bedienbarer Stellglieder (44-47) nacheinander wahlweise in den Strahlengang, dessen optische Achse im Bereich des Moduls (39) bzw. des Trägers (24) mit der Bezugsziffer (48) gekennzeichnet ist, bringbar ist. Da das Positionieren von Filtern im optischen Beleuchtungsstrahlengang relativ justier-unkritisch ist, kann für den Modul (39) auf eine hochpräzise Schiebe-Führung verzichtet werden.

Die zweite Einschub-Öffnung (49) im Horizontal-Teil des Stativoberteils (2) dient der Einführung eines nicht mit dargestellten Blenden-Moduls, vergleiche in Figur 4b sowie in Figur 4c die durch den Pfeil (50) angedeutete Einschub-Richtung. Wie aus Figur 4c ersichtlich, wird der Blenden-Modul (51) mittels einer Schwalbenschwanz-Führung (52) in Wirkstellung gefahren. Dabei ist es von großer Bedeutung, daß der Schwalbenschwanz einstückig mit dem Träger (24) verbunden ist. Das bedeutet also, daß die Präzisions-Führung nicht in dem Rahmenteil der Einschub-Öffnung (49) selbst, sondern an dem justiergenau positionierbaren Träger (24) angeordnet ist. Daher kann die Einschub-Öffnung (49) selbst - wie auch die bereits erwähnte Einschub-Öffnung (38) - relativ "unpräzise", also ohne aufwendige Feinbearbeitung und daher mit erweiterter Toleranz - erstellt werden, weil die zu fordernde Präzisions-Positionierung erst durch die an dem Träger (24) angeordnete Schwalbenschwanz-Führung (52) realisiert wird. Damit entfällt ein Glied in der Gesamt-Toleranzkette, denn es kann die in einem ersten Modul (2) vorzusehende Einschuböffnung (49) mit geringer Toleranz gefertigt werden, wohingegen der ohnehin mit seinen Präzisions-Anschlag-Flächen in enger Toleranz zu erstellende Träger lediglich noch einer korrelierenden Präzisions-Behandlung bezüglich seines einstückig angelenkten Schwalbenschwanzes (52) bedarf. Da das Ziel jeglicher fertigungs- bzw. servicefreundlichen Baugruppenmontage von komplexen optischen Systemgeräten eine Toleranzketten-Minimierung ist, ergeben sich durch die erfindungsgemäß vorgeschlagenen Mittel für Einschub und Positionierung des Blenden-Moduls (51) erhebliche Kosten- und Fertigungs-Vorteile.

Wie aus den Figuren 4a und 4b in Verbindung mit Figur 5 ersichtlich, kann nach Einsetzen des Trägers (24) in den offenen Oberteil von (2) ein Zwischen-Modul (3) (Figur 5) aufgesetzt werden. Er weist eine Tubuslinse (53) auf und ist in seinem unteren Bereich wie auch in seinem oberen, zum Binokular-Gehäuse (4) weisenden Bereich mit entsprechenden, präzise erstellten Anschlag- und Montageflächen versehen. Andere Zwischen-Module, die beispielsweise außer einer Tubuslinse noch eine Bertrand-Linse aufweisen oder einen Vergrößerungswechsler beinhalten oder als Polarisations-Modul konzipiert sind, sind - nach Wahl des Beobachters - ebenfalls adaptierbar, wobei sich die Einblickhöhe für den Beobachter nicht verändert.

Weitere Ausnehmungen (54) bzw. (55) in den Seitenwänden innerhalb der Horizontal-Bereichs des Stativoberteils (2) sind für die Einfügung eines Polarisators bzw. eines Analysators vorgesehen.

Wie aus Figur 2a ersichtlich, befindet sich im Innenbereich des Stativfußes (1) ein rohrförmiger Träger (56), in dem Linsen (57,58) sowie eine Leuchtfeldblende (59) und eine Aperturblende (60) bereits als vorgefertigte und vorjustierte Einheit montiert sind. Der rohrförmige Träger (56) dient als Fassung und stellt einen Modul dar, der mittels der erfindungsgemäßen Gehäuse-Ausstülpungen mit ihren Präzisions-Anschlagflächen justiergenau in der optischen Achse (61) des Beleuchtungs-Trakts positioniert werden kann. Der Beleuchtungsstrahl trifft nach Verlassen der Leuchtfeldblende (59) auf einen Umlenkspiegel (62), der auf 2 Schräg-Wänden, die ihrerseits Präzisions-Anschlagflächen aufweisen, sehr genau positioniert ist. Während der in den Figuren 4b bzw. 4c dargestellte Träger (24) im wesentlichen 2-dimensional (flächig) konzipiert ist, ist der Träger (56) als zylindrisches Rohr 3-dimensional ausgebildet. Bei derartigen Raumformen kann es angezeigt sein, mindestens ein weiteres Halteorgan vorzusehen, das den zylindrischen Träger zumindest teilweise formschlüssig umgreift und das ebenfalls Präzisions-Anschlagflächen aufweist, die mit bereits vorhandenen Präzisions-Anschlagflächen in den Gehäuse-Modulen korrespondieren. Nähere Einzelheiten bezüglich dieser rohrförmigen Trägerhalterung sind in einer Patentanmeldung mit der Bezeichnung: "Mikroskopstativfuß" ausgeführt, die zeitgleich eingereicht wird.

Mit dem erfindungsgemäßen modularen Mikroskopsystem gelingt es, alle erforderlichen bzw. wahlweise mit einzubeziehenden Gehäuse-Module bzw. Unter-Module bzw. Träger, auf denen vorjustierte und endmontierte Einzelbauteile bzw. Baugruppen angeordnet sind, jeweils nur noch an den vorgesehenen Präzisions-Anschlagflächen bzw. -Aufsatzflächen anzusetzen, festzuschrauben und ohne zusätzlichen Justage- bzw. optischen Abgleich-Aufwand zu fertigen und zusammenzusetzen. Im Stativoberteil bzw. im Fußteil sind dafür mechanische, präzise gefertigte Aufnahmeflächen zur Aufnahme dieser Module sowie zum Adaptieren weiterer Gehäuse-Teile vorgesehen.

Hieraus ergeben sich folgende Gesamt-Vorteile:
1. Abgleichfehler bzw. Justier-Ungenauigkeiten werden frühzeitig - und zwar bereits am Einzel-Modul - erkannt und nicht erst am fertigen Gesamt-Produkt.
2. Es ist eine servicefreundliche Baugruppen-Montage parallel möglich.
3. Die Modularität des Gesamt-Systems wird auf eine qualitativ neue Stufe gestellt: alle Baugruppen sind leicht austauschbar. Dadurch ist auch ein Umrüsten von einer Beleuchtungsart auf eine andere ohne Veränderung des ergonomischen bzw. designerischen Gesamtkonzeptes möglich. Beispielsweise kann der Filter-Modul 39 in den Stativfuß 1 (vgl. Fig.lb, 2a und 2b) oder in die Einschuböffnung 38 im Stativoberteil 2 eingesetzt werden. Durch die Exakt-Positionierung der Träger auf Ausstülpungen der Gehäuse-Innenwandungen ergibt sich gleichsam nach Art einer "Stelzen"- bzw. einer "Pfahlbau"-Konstruktionsweise ein auch unter thermischen Gesichtspunkten stabiles und störanfälligkeitsfreies Konstruktionsprinzip, da gerade im Bereich des optischen Präzisions-Gerätebaus Temperatureinflüsse besonders nachteilig ins Gewicht fallen, weil damit ungewollte Dejustierungen und Verfälschungen verbunden sind. Durch die materialeinsparende Bauweise "auf Pfählen" wird ein unkontrollierter Wärmefluß zum Träger eindrucksvoll vermieden. Die vorgeschlagene Multipunkt-Kontakt-Halterung bzw. -Aufhängung vermeidet als diskontinuierliches Halterungs- bzw. Translationsrichtungs-Konzept Nachteile, die bei einem kontinuierlichen Translationsmechanismus nach Art eines Schwalbenschwanzes systembedingt sind. Schließlich führt das erfindungsgemäße Konzept zu einem ergonomischen, modularen Mikroskopsystem bei dem ein systemintegriertes Auf- und Abrüsten von Modulen bzw. Unter-Modulen ohne Inkaufnahme anderer Nachteile sicher und reproduzierbar zu bewerkstelligen ist.

### Bezugsziffern-Liste

- 1:: Stativfuß
- 2:: Stativoberteil
- 3:: Zwischen-Modul
- 4:: Binokular-Gehäuse
- 5:: Handauflage
- 6:: manuelle Bedienmittel
- 7:: Präzisions-Führung
- 8:: Tischwinkel
- 9:: Mikroskoptisch
- 10:: Spiegelgehäuse
- 11,12:: Lampengehäuse
- 13:: Gehäuse-Modul
- 14,15,16:: kegelstumpfförmige Ausstülpungen
- 17:: wandförmiger Gehäuse-Innenraum-Aufteiler
- 18-22:: Präzisions-Anschlagflächen
- 23:: Anformung
- 24:: Träger
- 25a:: Bohrungen
- 25b:: Ausnehmungen
- 26:: Umlenkspiegel
- 27-29:: Linsen
- 30,36:: Pfeile
- 31:: Fluoreszenzteiler-Revolver
- 32-35:: Fluoreszenzteiler-Würfel
- 37a:: Einschub-Richtung für Objektivrevolver
- 37b:: Objektivrevolver
- 38:: Einschub-Öffnung für Filter-Modul (39)
- 39:: Filter-Modul
- 40-43:: Filter
- 44-47:: Stellglieder
- 48:: optische Achse
- 49:: Einschub-Öffnung für Blenden-Modul
- 50:: Einschub-Richtung
- 51:: Blenden-Modul
- 52:: Schwalbenschwanz-Führung
- 53:: Tubuslinse
- 54:: Polarisator-Einschuböffnung
- 55:: Analysator-Einschuböffnung
- 56:: rohrförmiger Träger
- 57,58:: Linsen
- 59:: Leuchtfeldblende
- 60:: Aperturblende
- 61:: optische Achse
- 62:: Umlenkspiegel

## Patentansprüche

1. Modulares Mikroskopsystem mit einem zusammengesetzten Mikroskop-Grundkörper, der einen Stativfuß, ein Stativoberteil und einen Zwischen-Modul mit ansetzbarem Binokular-Gehäuse aufweist, wobei der Grundkörper in mehrteiliger Rahmenkonstruktion ausgebildet ist,
**dadurch gekennzeichnet**, daß der Grundkörper Präzisions-Anschlagflächen (18-22) aufweist, die so gestaltet sind, daß eine diskontinuierliche Kontaktierung von Trägern (24,56) für ihr räumlich justiergenaues Positionieren und Montieren erfolgt, wobei auf bzw. in den Trägern optische und/oder mechanische und/oder elektrische und/oder elektronische vorjustierte und endmontierte Einzelbauteile (26-29; 40-43; 62) bzw. zu funktionellen Einheiten zusammengefaßte vorjustierte und endmontierte Bauteil-Gruppen (31; 57-60) angeordnet sind.

2. Modulares Mikroskopsystem nach Anspruch 1,
**dadurch gekennzeichnet**, daß die Präzisions-Anschlagflächen (18-22) als kleindimensionierte plane Anlage- bzw. Aulageflächen ausge-bildet sind, die hinsichtlich ihrer Anordnung in der Ebene bzw. im Raum mit der flächigen bzw. räumlichen Dimensionierung des positionsgerecht zu fixierenden Trägers (24 bzw. 56) korrespondieren.

3. Modulares Mikroskopsystem nach mindestens einem der vorhergehenden Ansprüche,
**dadurch gekennzeichnet,** daß für die justiergenaue Positionierung eines Trägers (24; 56) mindestens ein einstückiges Kombinations-Anschlagflächensystem (15, 16) vorgesehen ist, das mindestens zwei Präzisions-Anschlagflächen (18-20) aufweist, die sich in definierter räumlicher Zuordnung - vorzugsweise in senkrecht zueinander ausgerichteten Ebenen - befinden.

4. Modulares Mikroskopsystem nach mindestens einem der vorhergehenden Ansprüche,
**dadurch gekennzeichnet**, daß die Präzisions-Anschlagflächen (18-20) auf zylindrischen oder kegelstumpfförmigen Gehäuse-Ausstülpungen (14-16), die von der inneren Deckenwandung eines Grundkörper-Teils stalaktitenartig herabhängen, angeordnet sind.

5. Modulares Mikroskopsystem nach mindestens einem der vorhergehenden Ansprüche,
**dadurch gekennzeichnet,** daß die Präzisions-Anschlagflächen (18-20) auf zylindrischen oder kegelstumpfförmigen Gehäuse-Ausstülpungen, die von der inneren Bodenwandung eines Grundkörper-Teils stalagmitenartig emporragen, angeordnet sind.

6. Modulares Mikroskopsystem nach mindestens einem der Ansprüche 4 und 5,
**dadurch gekennzeichnet,** daß die die Anschlagflächen (18-21) tragenden Gehäuse-Ausstülpungen (14-16, 23) entlang ihren Längsausdehnungen teilweise von den Seitenwandungen der Grundkörper-Teile aufgenommen werden.

7. Modulares Mikroskopsystem nach mindestens einem der vorhergehenden Ansprüche
**dadurch gekennzeichnet**, daß in den Innenräumen der Grundkörper-Teile plane und/oder gewinkelte wandförmige Gehäuse-Innenraum-Aufteiler (17) vorgesehen sind, die - gegebenenfalls - mit Präzisions-Auflageflächen (21) versehen sind.

8. Modulares Mikroskopsystem nach Anspruch 7,
**dadurch gekennzeichnet**, daß die Auflagefläche (21) nur auf einem erhaben ausgebildeten Teilbereich der Gehäuse-Innenraum-Aufteiler (17) angeordnet ist.

9. Modulares Mikroskopsystem nach mindestens einem der vorhergehenden Ansprüche,
**dadurch gekennzeichnet**, daß einige der die Präzisions-Anschlagflächen (18-22) aufweisenden Ausstülpungen (14-16, 23) bzw. Gehäuse-Innenraum-Aufteiler (17) entlang ihren Längserstreckungen Bohrungen (25a) aufweisen, die mit entsprechenden Ausnehmungen (25b) in bzw. an den Trägern (24) korrespondieren.

10. Modulares Mikroskopsystem nach mindestens einem der vorhergehenden Ansprüche,
**dadurch gekennzeichnet**, daß die Träger (24) im wesentlichen 2-dimensional - beispielsweise als Bühne, Boden oder Schieber - zum Anoder Einsetzen an bzw. in eines der Teilsysteme (1-3) des Mikroskop-Grundkörpers ausgebildet sind.

11. Modulares Mikroskopsystem nach mindestens einem der vorhergehenden Ansprüche 1 bis 9,
**dadurch gekennzeichnet**, daß die Träger als 3-dimensionale Gebäuseteile - beispielsweise als Rohr, Quader, Kubus, Prisma, Parallelepiped oder als gewinkeltes Chassis-Teil - zum An- oder Einsetzen oder Einschieben in mindestens eines der Teilsysteme (1-3) des Mikroskop-Grundkörpers ausgebildet sind.

12. Modulares Mikroskopsystem nach mindestens einem der Ansprüche 10 und 11,
**dadurch gekennzeichnet**, daß zusätzlich mindestens ein Halteorgan vorgesehen ist, das den Träger (24, 56) zumindest teilweise formschlüssig umgreift, und daß für die justiergenaue Positionierung dieses Halteorgans ebenfalls entsprechende Präzisions-Anschlagflächen (18-22) in bzw. an den Grundkörper-Teilen vorgesehen sind.

13. Modulares Mikroskopsystem nach mindestens einem der Ansprüche 9 bis 12,
**dadurch gekennzeichnet**, daß der Träger als abgewinkelte Halterung (8) für den Mikroskoptisch (9) ausgebildet ist, wobei die halterung im Vertikalbereich des Stativoberteils (2) Präzisions- Anschlags- und Führungsflächen für eine spielfreie Vertikalverstellung aufweist.

14. Modulares Mikroskopsystem nach mindestens einem der Ansprüche 9,11 und 12,
**dadurch gekennzeichnet**, daß der Träger neben optischen Bauelementen, wie Spiegeln (26), Linsen (27-29; 57, 58) und Blenden (58, 59), zusätzlich eine endmontierte Revolver-Einrichtung (31) aufweist, die ihrerseits vorjustierte und endmontierte Bauteile gleicher Art, aber unterschiedlicher physikalisch-optischer Funktion, beispielsweise Fluoreszenzteiler-Würfel (32-35), enthält.

15. Modulares Mikroskopsystem nach mindestens einem der vorhergehenden Ansprüche 9 bis 12,
**dadurch gekennzeichnet**, daß der Träger als Einschub-Modul (51) ausgebildet ist, in.dem entlang dessen optischer Achse mehrere Blenden - beispielsweise ortsfeste oder ortsvariable Festblenden oder formvariable Blenden - angeordnet sind, die mittels zugeordneter Steuerungsmittel in Wirkstellung bringbar und - gegebenenfalls - größenvariabel eingestellt werden können.

## Claims

1. Modular microscope system with a composite microscope base body which displays a stand foot, an upper stand part and an intermediate module with attachable binocular housing, wherein the base body is formed in multipart frame construction, characterised thereby, that the base body displays precision abutment surfaces (18 to 22), which are so structured that a discontinuous contacting of carriers (24, 56) takes place for their spatially accurately adjusted positioning and mounting, wherein optical and/or mechanical and/or electrical and/or electronic preliminarily adjusted and finally assembled individual components (26 to 29; 40 to 43; 62) or preliminarily adjusted and finally assembled component groups (31; 57 to 60) combined into functional units are arranged on or in the carriers.

2. Modular microscope system according to claim 1, characterised thereby, that the precision abutment surfaces (18 to 22) are formed as planar contact or support surfaces which are of small dimensions and in respect of their arrangement in the plane or in space correspond with the areal or spatial dimensioning of the carrier (24 to 56) to be fixed to correct in position.

3. Modular microscope system according to at least one of the preceding claims, characterised thereby, that at least one single piece combination abutment area system (15, 16), which displays at least two precision abutment surfaces (18 to 20), which are situated in defined spatial association preferably in planes oriented one perpendicularly to the other, is provided for the accurately adjusted positioning of a carrier (24, 56).

4. Modular microscope system according to at least one of the preceding claims, characterised thereby, that the precision abutment surfaces (18 to 20) are arranged on cylindrical or frustoconical housing protrusions (14 to 16), which depend in the manner of stalactites from the inner ceiling wall of a base body part.

5. Modular microscope system according to at least one of the preceding claims, characterised thereby, that the precision abutment surfaces (18 to 20) are arranged on cylindrical or frustoconical housing protrusions which protrude in the manner of stalagmites from the inner base wall of a base body part.

6. Modular microscope system according to at least one of the claims 4 and 5, characterised thereby, that the housing protrusions (14 to 16, 23) carrying the abutment surfaces (18 to 21) are received along their longitudinal extents partially by the side walls of the base body parts.

7. Modular microscope system according to at least one of the preceding claims, characterised thereby, that planar and/or angled wall-shaped interior housing space dividers (17), which are in a given case provided with precision support surfaces (21), are provided in the interior spaces of the base body parts.

8. Modular microscope system according to claim 7, characterised thereby, that the support surface (21) is arranged only on a raised partial region of the interior housing space dividers (17).

9. Modular microscope system according to at least one of the preceding claims, characterised thereby, that some of the protrusions (14 to 16, 23) or interior housing space dividers (17), which display the precision abutment surfaces (18 to 22), display bores (25a) along their longitudinal extents, which correspond with corresponding recesses (25b) in or at the carriers (24).

10. Modular microscope system according to at least one of the preceding claims, characterised thereby, that the carriers (24) are formed to be substantially two-dimensional, for example as stage, base or slide, for attachment to or insertion into one of the partial systems of the microscope base body.

11. Modular microscope system according to claim 1 to 9, characterised thereby, that the carriers are formed as three-dimensional housing parts, for example as tube, block, cube, prism, parallelepiped or as angled chassis part, for attachment to or insertion into at least one of the partial systems (1 to 3) of the microscope base body.

12. Modular microscope system according to at least one of the claims 10 and 11, characterised thereby, that additionally at least one retaining organ is provided, which at least partially shape-lockingly encompasses the carrier (24, 56) and that corresponding precision abutment surfaces (18 to 22) are likewise provided in or at the base body parts for the accurately adjusted positioning of this retaining organ.

13. Modular microscope system according to at least one of the claims 9 to 12, characterised thereby, that the carrier is constructed as bent-over mount (8) for the microscope stage (9), wherein the mount in the vertical region of the upper stand part (2) displays precision abutment and guide surfaces for a vertical adjustment free of play.

14. Modular microscope system according to at least one of the claims 9, 11 and 12, characterised thereby, that the carrier, apart from optical components such as mirrors (26), lenses (27 to 29; 57, 58) and light stops (58, 59), additionally displays an end-mounted turret equipment (31), which in its turn contains preliminarily adjusted and end-mounted components of like kind, but different physically optical function, for example fluorescence divider cubes (32 to 35).

15. Modular microscope system according to at least one of the preceding claims 9 to 12, characterised thereby, that the carrier is constructed as slide-in module (51), in which several light stops - for example solid light stops of fixed or variable location or light stops of variable shape - are arranged along its optical axis, which light stops can be brought into operative setting by means of associated control means and in a given case be set to be variable in size.

## Revendications

1. Système de microscope modulaire avec un corps de base de microscope composé qui présente un pied, une partie de dessus du pied et un module intermédiaire avec boîtier de binoculaire pouvant y être mis en place, où le corps de base est d'une construction en une structure en plusieurs parties, caractérisé en ce que le corps de base présente des surfaces de butée de précision (18-22) qui sont configurées de façon qu'un contact discontinu de supports (24, 56) pour leur positionnement et leur montage d'ajustement dans l'espace se produisent, où sur ou respectivement dans les supports sont agencés des constituants individuels optiques et/ou mécaniques et/ou électriques et/ou électroniques préajustés et définitivement assemblés (26-29 ; 40-43 ; 62) ou respectivement des groupes de constituants préajustés et définitivement assemblés rassemblés en unité fonctionnelle (31 ; 57-60).

2. Système de microscope modulaire selon la revendication 1, caractérisé en ce que les surfaces de butée de précision (18-22) sont configurées comme des surfaces d'appui ou respectivement portantes planes de petites dimensions qui correspondent, étant donné leur agencement dans le plan ou respectivement dans l'espace, avec le dimensionnement à plat ou respectivement dans l'espace du support (24) ou respectivement (56) à fixer en bonne position;

3. Système de microscope modulaire selon au moins l'une des revendications précédentes, caractérisé en ce que pour le positionnement bien ajusté d'un support (24, 56) au moins un système de surfaces de butée en combinaison en une pièce (15, 16) est prévu, qui présente au moins deux surfaces de butée de précision (18-20) qui se trouvent en une relation définie dans l'espace, avantageusement dans des plans dirigés perpendiculairement l'un à l'autre.

4. Système de microscope modulaire selon au moins l'une des revendications précédentes, caractérisé en ce que les surfaces de butée de précision (18-20) sont agencées sur des protubérances du boîtier de forme cylindrique ou en tronc de cône (14-16), qui pendent de la paroi supérieure interne d'une partie du corps de base à la façon de stalactites.

5. Système de microscope modulaire selon au moins l'une des revendications précédentes, caractérisé en ce que les surfaces de butée de précision (18-20) sont agencées sur des protubérances du boîtier de forme cylindrique ou en tronc de cône qui dépassent de la paroi interne du fond d'une partie du corps de base à la manière de stalagmites.

6. Système de microscope modulaire selon au moins l'une des revendications 4 et 5, caractérisé en ce que les protubérances (14-16, 23) du boîtier portant les surfaces de butée (18-21) sont reçues, le long de leurs extensions longitudinales, partiellement par les parois latérales des parties de corps de base.

7. Système de microscope modulaire selon au moins l'une des revendications précédentes, caractérisé en ce que dans les espaces internes des parties de corps de base sont prévus des diviseurs d'espace interne du boîtier en forme de paroi plane et/ou en angle (17) qui, le cas échéant, sont pourvus de surfaces portantes de précision (21).

8. Système de microscope modulaire selon la revendication 7, caractérisé en ce que la surface portante (21) n'est agencée que sur une zone partielle en relief des diviseurs d'espace interne (17) du boîtier.

9. Système de microscope modulaire selon au moins l'une des revendications précédentes, caractérisé en ce que certaines des protubérances (14-16, 23) présentant les surfaces de butée de précision (18-22) ou respectivement des diviseurs de l'espace interne du boîtier (17) présentent, le long de leurs extensions longitudinales, des perçages (25a) qui correspondent à des évidements correspondants (25b) respectivement dans ou sur les supports (24).

10. Système de microscope modulaire selon au moins l'une des revendications précédentes, caractérisé en ce que les supports (24) sont configurés essentiellement bidimensionnellement comme des plates-formes, des fonds ou des coulisseaux pour une application sur ou une mise en place respectivement dans l'un des systèmes partiels (1-3) du corps de base du microscope.

11. Système de microscope modulaire selon au moins l'une des revendications précédentes 1 à 9, caractérisé en ce que les supports sont configurés comme des parties de boîtier tridimensionnelles, par exemple en tant que tubes, parallélépipèdes, cubes, prismes, parallélépipèdes ou en tant que parties de châssis en angle pour application ou mise en place ou insertion dans au moins l'un des systèmes partiels (1-3) du corps de base du microscope.

12. Système de microscope modulaire selon au moins l'une des revendications 10 et 11, caractérisé en ce qu'en plus, au moins un organe d'arrêt est prévu qui entoure les supports (24, 56) au moins partiellement en liaison de forme parce que, pour le positionnement bien ajusté de cet organe d'arrêt, sont également prévues des surfaces de butée de précision correspondantes (18-22) dans ou respectivement sur les parties du corps de base.

13. Système de microscope modulaire selon au moins l'une des revendications 9 à 12, caractérisé en ce que le support est configuré en tant que retenue en angle (8) pour l'optique (9) du microscope et la retenue présente dans la zone verticale de la partie avant (2) du pied, des surfaces de butée et de guidage de précision pour un déplacement vertical sans jeu.

14. Système de microscope modulaire selon au moins l'une des revendications 9, 11 et 12, caractérisé en ce que le support présente, outre des composants optiques comme des miroirs (26), des lentilles (27-29 ; 57, 58) et des obturateurs (58, 59), de plus, un dispositif revolver (31) définitivement assemblé qui contient pour sa part des constituants préajustés et définitivement assemblés du même type mais ayant une fonction physico-optique différente, par exemple un cube répartiteur de fluorescence (32-35) .

15. Système de microscope modulaire selon au moins l'une des revendications précédentes 9 à 12, caractérisé en ce que le support est configuré en tant que module à insérer (51) dans lequel, le long de son axe optique, sont agencés plusieurs obturateurs, par exemple des obturateurs fixes, stationnaires ou variables ou des obturateurs à forme variable qui peuvent par des moyens affectés de réglage être ajustés en position active et le cas échéant de grandeur variable.
